# EUROPÄISCHE PATENTSCHRIFT

(11) **EP 2 252 508 B1**
(45) Veröffentlichungstag und Bekanntmachung des Hinweises auf die Patenterteilung: **07.09.2011**
(21) Anmeldenummer: 09722135.2
(22) Anmeldetag: 16.03.2009
(51) Int. Cl.: B64D 11/04

(54) **VORRICHTUNG ZUR LÖSBAREN BODENBEFESTIGUNG VON SCHRÄNKEN ODER DERGLEICHEN IN BORDKÜCHEN VON FLUGZEUGEN**
DEVICE FOR RELEASABLE MOUNTING OF CABINETS OR THE LIKE TO FLOORS IN GALLEYS IN AIRPLANES
DISPOSITIF PERMETTANT DE FIXER AU SOL D'UNE MANIÈRE LIBÉRABLE DES ARMOIRES OU ANALOGUES DANS DES CUISINES DE BORD D'AVIONS

(30) Priorität: 18.03.2008 DE 202008003772 U
(43) Veröffentlichungstag der Anmeldung: 24.11.2010
(73) Patentinhaber: Sell Gmbh, 35745 Herborn (DE)
(72) Erfinder: TKOCZ, Maurice, 35625 Hüttenberg (DE)
(74) Vertreter: Grosse, Wolf-Dietrich Rüdiger
(86) Internationale Anmeldenummer: PCT/EP2009/001908
(87) Internationale Veröffentlichungsnummer: WO 2009/115271

(56) Entgegenhaltungen:
- EP-A- 1 892 142
- DE-A1-102004 012 262
- US-A- 4 213 593
- US-A- 5 520 357

## Beschreibung

Die Erfindung betrifft eine Vorrichtung zur lösbaren Schnellbefestigung von tragend aufgenommenen Schränken oder dergleichen Einbau- und Ausstattungselementen in Bordkücheneinheiten von Flugzeugen mit den im Oberbegriff des unabhängigen Anspruchs angegebenen Merkmalen, wie durch die EP 1 892 142 A zur Befestigung eines Sitzes bekannt geworden.

Unabhängig von den Flugzeugtypen werden die aus mehreren Einbau- und Ausstattungselementen bestehenden Bordküchen in den Türbereichen entweder in Flugrichtung oder quer zur Flugrichtung auf an der Bodenstruktur der Kabine verankerten Sitzschienen eingebaut. Außerdem werden die Bordküchen bzw. deren Elementeneinheiten über die Decke am Flugzeug befestigt. Die Bodenbefestigungen müssen hierbei je nach Belastung und Kraftverlauf in der Bordküche sowohl Kräfte in X- und Y- als auch Z-Richtung aufnehmen. Eine Halterung mit einer Gewindebuchse zur Abstandseinstellung in Z-Richtung und integriertem Exzenter zur X- und Y-Positionierung ist aus der DE 10 2004 012 262 A1 bekannt.

Eine in der bisherigen Praxis bekannte Befestigung erfolgt über Schraubenverbindungen mit einem vorgegebenen Drehmoment. Die montierten Schrauben werden vorrangig von Längskräften, d.h. mit Wirkung in vertikaler Z-Richtung belastet. Zur Aufnahme von in Flug- bzw. X-Richtung und in Quer- bzw. Z-Richtung wirkenden Kräften müssen zusätzliche Maßnahmen getroffen werden. Diese üblichen Bodenbefestigungen über Schraubverbindungen erfordern einen hohen Montageaufwand und zudem spezielle Werkzeuge, wenn die Sitzplatzkapazitäten im Flugzeug variiert werden sollen. Hierzu müssen nämlich die kompletten Bordküchen verlagert werden. Durch die US 5.520.357 A ist eine Ausführung einer Schraubverbindung bekannt geworden. Die US 4.213.593 A zeigt einen Spannhebelmechanismus zum Lösen und Verriegeln eines Flugzeugsites am Kabinenboden.

Der Erfindung liegt daher die Aufgabe zugrunde, eine Vorrichtung der eingangs genannten Art zu schaffen, die in einfacher Weise und mit deutlich verringertem Zeitaufwand einen Umbau von Bordküchen in Flugzeugen ermöglicht, um Platz für weitere Sitzreihen bereit zu stellen, dabei gleichwohl die hohen Sicherheitsstandards erfüllt und die in den verschiedenen Richtungen auftretenden großen Kräfte aufnimmt.

Diese Aufgabe wird erfindungsgemäß dadurch gelöst, dass ein Schnellbefestigungsmittel als Verbinder zu einer mit einer Aussparung auf das Unterteil aufgesteckten Wand der Bordkücheneinheit von oben nach unten aufeinanderfolgend den Spannhebel, das Unterteil und den Nutenstein aufweist, wobei diese Bauteile auf einem zentral in fluchtenden Bohrungen durch alle Bauteile gesteckten Schraubbolzenmittel mit im ungespannten Zustand des Schnellbefestigungsmittels von dem Federmittel beaufschlagt losem, ein Bewegungsspiel zumindest des Nutensteins erlaubenden Zusammenhalt vormontiert sind, wobei das Federmittel als Druckfeder ausgebildet und gegen den Nutenstein abgestützt von einem in das Unterteil einsetzbaren, einen Kopfzapfen des Nutensteins übergreifenden Verriegelungsstein eingeschlossen ist und bei geöffnetem Spannhebel den Verriegelungsstein zur Freigabe des Nutensteins von diesem nach oben abhebt.

Es lässt sich hiermit ein trotz des Bewegungsspiels zum Einsatz völlig fertig vormontiertes, zusammen gehaltenes Schnellbefestigungsmittel erreichen. Nach dem Einführen in die ein gestuftes Verstellen bzw. -schieben ermöglichende Rasternut der Sitzschiene braucht lediglich der Spannhebel gegen die Kraft des Federmittels verschwenkt zu werden, um das Schnellbefestigungsmittel sicher auf der Sitzschiene festzulegen. Bei geöffnetem Spannhebel drückt die nach außen völlig eingekapselte Feder den Verriegelungsstein nach oben, der sich von dem Nutenstein abhebt, diesen freigibt, so dass danach ein Verschieben der kompletten Bodenbefestigung möglich ist.

Nach einem Vorschlag der Erfindung ist eine Bordküche bzw. eine Einbauelementeneinheit auf mindestens vier verteilt vorgesehenen Schnellbefestigungsmitteln angeordnet. Hierdurch ergibt sich eine Lastverteilung auf mehrere Befestigungspunkte, z.B. an allen Wänden der Bordküche bzw. deren zusammengestellten Elementeneinheiten. Mit dem Verschwenken des Spannhebels in die Verriegelungslage und dem damit einhergehenden Verschluss aller Bauteile sind sämtliche Freiheitsgrade des lose vormontierten Schnellbefestigungsmittels gesperrt.

Wenn dann ein Umbau erforderlich wird, ist das ebenfalls ohne Werkzeug und in kürzest möglicher Zeit durchzuführen. Denn es brauchen lediglich die Spannhebel in Gegenrichtung, d.h. in ihre geöffnete Lage verschwenkt zu werden. Der mit dem erfindungsgemäßen Schnellbefestigungsmittel erreichte Form- und Kraftschluss ist damit aufgehoben und die von den mehreren Schnellbefestigungsmitteln getragene Küche bzw. einzelne über- und/oder nebeneinander gebaute Schrankelemente oder dergleichen können über die mit ihren Nutensteinen in den Sitzschienen gleitenden Schnellbefestigungsmitteln in die gewünschte Position verschoben werden. Die Verschiebeeigenschaften der Schnellbefestigungsmittel lassen sich begünstigen, wenn die in der Sitzschiene gleitenden Bereiche des Schnellbefestigungsmittels und/oder der Sitzschiene mit einer das Gleiten fördernden Beschichtung, z.B. Teflon, versehen sind.

Wenn nach einem weiteren vorteilhaften Vorschlag erfindungsgemäß zumindest die beiden den Längskanten der Rasternut der Führungsschiene zugewandten Seiten des Verriegelungssteins als Schlüsselflächen ausgebildet sind, vorzugsweise der Verriegelungsstein insgesamt quadratisch ist, ist der die insbesondere in X- und Y-Richtung auftretenden Kräfte aufnehmende Verriegelungsstein außerdem geeignet, ein Verkanten des Nutensteins beim Verschieben zu verhindern. Zur Verhinderung von Verkantungen des Nutensteins trägt ebenfalls bei, wenn das Unterteil des Schnellbefestigungsmittels mit bodenseitigen, in die Rasternut der Führungsschiene eintauchenden Führungsstegen ausgebildet ist.

Nach einem Vorschlag der Erfindung sind in der Durchgangsbohrung des Unterteils oberhalb des Verriegelungssteins konzentrisch eine innere und eine äußere

Exzenterbuchse angeordnet. Durch Verstellen der Exzenterbuchsen ist es möglich, bei der Montage flugzeugseitige Toleranzen auszugleichen und eine Feineinstellung vorzunehmen.

Wenn vorzugsweise der Spannhebel auf einem Druckstück angeordnet ist, trägt dieses wesentlich zur Aufnahme der auf den Spannhebel übertragenen Last bei.

Eine Ausführung der Erfindung sieht vor, dass das Unterteil zweistückig ist und aus einem Bodenstück und einem Kopfstück besteht. Nach einer anderen Ausführung mit einem einstückigen Unterteil ist der Spannhebel mit dem Druckstück in einem Fenster eines Oberteils auf dem unteren Fenstersteg angeordnet. Ein Schnellbefestigungsmittel mit einem einstückigen Unterteil und darauf angeordnetem Oberteil kann schmaler und höher ausgeführt werden, weil beispielsweise ein weiterer Exzenter, wenn das gefordert wird, zur Feineinstellung bzw. zum Ausgleich von Toleranzen in Z-Richtung in dem Oberteil vorgesehen werden kann.

Das zum Zusammenhalt durch fluchtend verlaufende Bohrungen aller benötigten Bauteile hindurch gesteckte Schraubbolzenmittel kann als ein Stegbolzen des Nutensteins ausgebildet sein, auf dem vom Spannhebel her eine Mutter aufschraubbar ist. Ein alternativer Vorschlag sieht vor, dass das Schraubbolzenmittel eine mit ihrem Kopf im Spannhebel aufliegende, mit ihrem anderen Ende in den Nutenstein einschraubbare Schraube ist.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: in einer Vorderansicht als Einzelheit ein auf einer Sitzschiene eines Flug- zeugs festgelegtes Schnellbefestigungsmittel mit einem von diesem ge- tragenen, angedeuteten Bordküchenelement;
- Fig. 2: das Schnellbefestigungsmittel in einem Schnitt entlang der Linie B-B von Fig. 1;
- Fig. 3: in einer vergrößerten Darstellung das Schnellbefestigungsmittel nach Fig. 1 in einem Schnitt entlang der Linie A-A;
- Fig. 4: den Gegenstand der Fig. 1 in einer perspektivischen Darstellung;
- Fig. 5: den Gegenstand der Fig. 4 in einer anderen perspektivischen Darstellung und demgegenüber zum Verschieben geöffnetem Spannhebel des Schnellbefestigungselementes, links unten oberhalb der Sitzschiene aus- geschnitten dargestellt;
- Fig. 6: das Schnellbefestigungsmittel der Fig. 1 in einer perspektivischen Explo- siv-Darstellung;
- Fig. 7: in einer perspektivischen Explosiv-Darstellung eine andere Ausführung eines Schnellbefestigungsmittels; und
- Fig. 8: eine Darstellung wie gemäß Fig. 7 mit demgegenüber anderer Schraub- bolzenanordnung zum Zusammenhalt der einzelnen Bauteile.

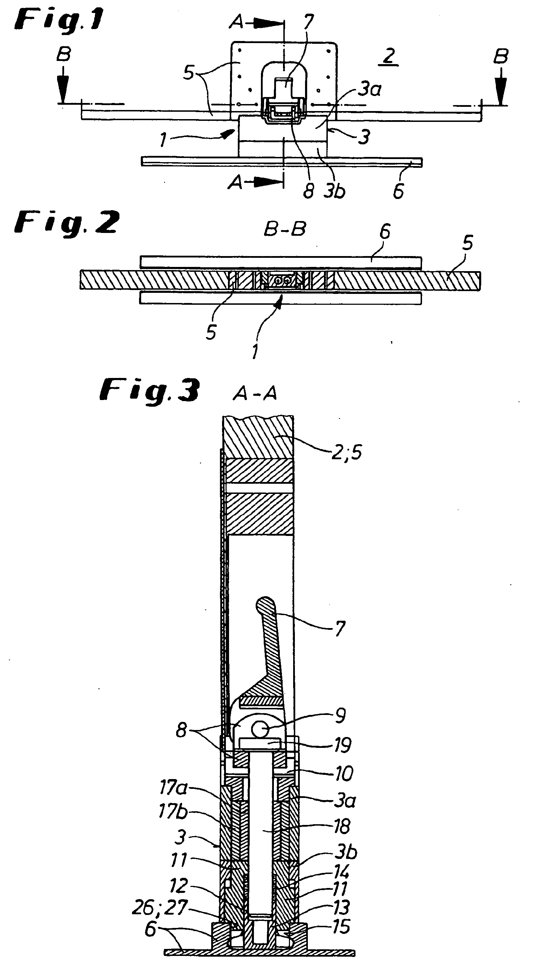

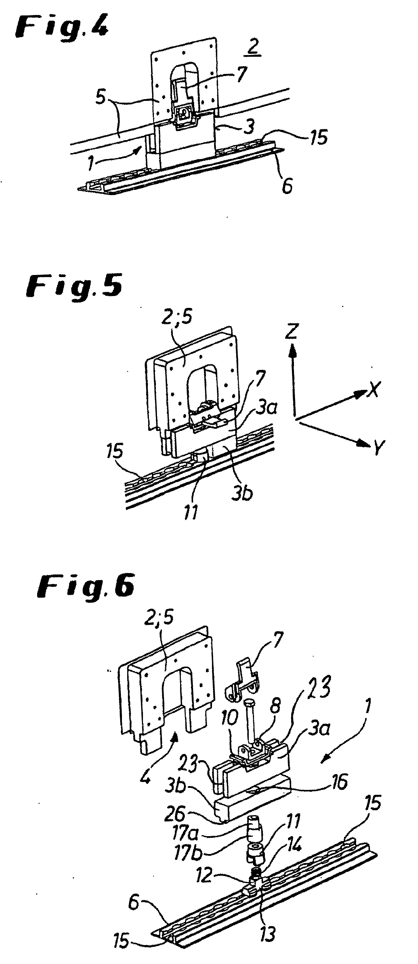

Ein in den Fig. 1 bis 6 dargestelltes Schnellbefestigungsmittel 1 trägt, wozu mehrere dieser Schnellbefestigungsmittel 1 verteilt angeordnet sind, eine Bordküche bzw. eine aus mehreren Schrankelementen oder dergleichen zusammengestellte Bordkücheneinheit 2. Von dieser ist lediglich eine auf ein Unterteil 3 des Schnellbefestigungsmittels 1 mit einer Aussparung 4 (vgl. Fig. 6) aufgesteckte Wand 5 angedeutet. Die Bordkücheneinheit 2 ist über die Schnellbefestigungsmittel 1 auf parallel verlaufenden Sitzschienen 6 festgelegt. Das Schnellbefestigungsmittel 1 als Verbinder zur Wand kann in Längsrichtung der Sitzschiene 6 oder quer dazu angeordnet werden. Ein Spannhebel 7 des Schnellbefestigungselementes 1 nimmt in der Verriegelungsposition eine hochgeschwenkte, in eine Ausnehmung der Wand 5 eintauchende Lage ein. Demgegenüber ist in Fig. 5 die entriegelte, aus der Wand 5 der Bordküche 2 nach außen vorstehende Schwenklage des Spannhebels 7 zu erkennen.

Wie näher den Fig. 3 und 6 zu entnehmen ist, setzt sich das Spannelement von oben nach unten, d.h. zur Sitzschiene 6 hin, aus mehreren Bauteilen zusammen. Der Spannhebel 7 ist in einem U-Profilstück 8 auf einer Achse 9 schwenkbar gelagert und stützt sich auf dem Unterteil 3 über ein Druckstück 10 ab. Das Unterteil 3 ist zweistückig und besteht aus einem Kopfstück 3a und einem Bodenstück 3b. In diesem bzw. dessen Bodenstück 3b ist ein Verriegelungsstein 11 angeordnet, der einen Kopfzapfen 12 eines Nutensteins 13 übergreift und ein als Druckfeder 14 ausgebildetes, sich auf dem Kopfzapfen 12 abstützendes Federmittel 14 einschließt.

Der Nutenstein 13 greift in eine zum gestuften Verstellen ausgebildete Rasternut 15 der Sitzschiene 6 ein (vgl. Fig. 6). Oberhalb des Verriegelungssteins 11 sind in einer Durchgangsbohrung 16 des Unterteils 3 bzw. des Kopfstücks 3a eine innere und eine äußere Exzenterbuchse 17a bzw. 17b angeordnet. Alle vorgenannten Bauteile werden von einem Schraubbolzenmittel 18 zusammengehalten, das durch mit der Durchgangsbohrung 16 des Unterteils 3 fluchtenden Bohrungen aller Bauteile gesteckt ist und mit seinem Schraubenkopf 19 auf dem U-Profilstück 8 des Spannhebels 7 aufliegt und mit seinem unteren Ende in den Nutenstein 13 eingeschraubt ist.

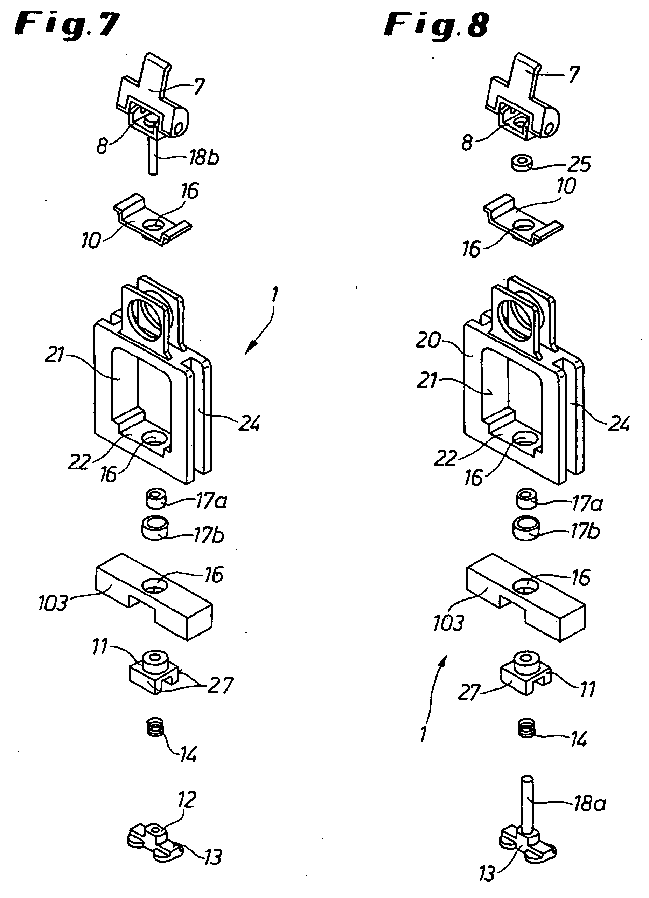

Die in den Fig. 7 und 8 dargestellte Variante des Schnellbefestigungsmittels 1 unterscheidet sich von der vorbeschriebenen Ausführung im wesentlichen lediglich dadurch, dass nur ein flaches, schmaleres Unterteil 103 und darüber angeordnet ein höher bauendes Oberteil 20 vorgesehen ist. Das Oberteil ist mit einem Fenster 21 ausgebildet, auf dessen unteren Fenstersteg 22 das Druckstück 10 mit dem Spannhebel 7 und dem U-Profilstück 8 zur Auflage kommt. Während bei der Ausführung nach den Fig. 1 bis 6 das Kopfstück 3a mit stirnseitigen Nuten 23 zum Aufstecken der Wandteile 5 der Bordküche 2 versehen ist, weist hier das Oberteil 20 solche stirnseitigen Aufnahmenuten 24 auf. Abweichend von Fig. 7, in der das Schraubbolzenmittel wie bei der Ausführung nach den Fig. 1 bis 6 als in den Nutenstein 13 einschraubbare Schraube 18a ausgeführt ist, ist nach Fig. 8 das Schraubmittel ein integrierter Stehbolzen 18a des Nutensteins 13, auf den von oben in das U-Profilstück 8 eine Mutter 25 aufgeschraubt wird.

Durch entweder schmale, bodenseitige Führungsstege 26 des Bodenstücks 3b des Unterteils 3 (vgl. Fig. 6) oder Ausbildung des Verriegelungssteins 11 mit sich zumindest entlang der Kanten der Rasternut 15 ersteckenden Schlüsselflächen 27, die in die Rasternut 15 der Sitzschienen 6 eintauchen, wird ein Verkanten der Befestigungsmittel 1 beim Verschieben in den Rasternuten 15 verhindert.

In jedem Fall wird durch den gegen das Federmittel/die Druckfeder 14 mit losem Zusammenhalt der Bauteile des Schnellbefestigungsmittels 1 ein einfaches Verschieben ermöglicht, während hingegen beim Verschwenken des Spannhebels 7 in die Festlegungsposition (vgl. die Fig. 1 und 3) eine allen Anforderungen des Flugbetriebs gerecht werdende Verriegelung an der Sitzschiene 6 gewährleistet ist.

### Bezugszeichenliste:

- 1: Schnellbefestigungsmittel
- 2: Bordküche/Bordkücheneinheit
- 3,103: Unterteil
- 3a: Kopfstück
- 3b: Bodenstück
- 4: Aussparung
- 5: Wand
- 6: Sitzschiene
- 7: Spannhebel
- 8: U-Profilstück
- 9: Achse
- 10: Druckstück
- 11: Verriegelungsstein
- 12: Kopfzapfen
- 13: Nutenstein
- 14: Federmittel/Druckfeder
- 15: Rasternut
- 16: Durchgangsbohrung
- 17a: innere Exzenterbuchse
- 17b: äußere Exzenterbuchse
- 18: Schraubbolzenmittel
- 18a: Stehbolzen
- 18b: Schraube
- 19: Schraubenkopf
- 20: Oberteile
- 21: Fenster
- 22: Fenstersteg
- 23: stirnseitige Nut
- 24: Aufnahmenut
- 25: Mutter
- 26: Führungssteg
- 27: Schlüsselfläche

## Patentansprüche

1. Vorrichtung zur lösbaren Schnellbefestigung von tragend aufgenommenen Schränken oder dergleichen Einbau- und Ausstattungselementen in Bordkücheneinheiten (2) von Flugzeugen auf den in Flugrichtung am Kabinenboden verlegten Sitzschienen (6), umfassend einen Spannhebel (7), ein Unterteil (3; 103) und einen in eine Rasternut (15) der Sitzschiene (6) eingreifenden Nutenstein (13), ein Schraubenbolzenmittel (18; 18 a, 18 b) und ein Federmittel (14)
**dadurch gekennzeichnet,**
**dass** ein Schnellbefestigungsmittel (1) als Verbinder zu einer mit einer Aussparung (4) auf das Unterteil (3; 103) aufgesteckten Wand (5) der Bordkücheneinheit (2; 5) von oben nach unten aufeinanderfolgend den Spannhebel (7), das Unterteil (3; 103) und den Nutenstein (13) aufweist, wobei diese Bauteile auf einem zentral in fluchtenden Bohrungen (16) durch alle Bauteile gesteckten Schraubbolzenmittel (18; 18a, 18b) mit im ungespannten Zustand des Schnellbefestigungsmittels (1) von dem Federmittel (14) beaufschlagt losem, ein Bewegungsspiel zumindest des Nutensteins (13) erlaubenden Zusammenhalt vormontiert sind, wobei das Federmittel (14) als Druckfeder ausgebildet und gegen den Nutenstein (13) abgestützt von einem in das Unterteil (3; 3b) einsetzbaren, einen Kopfzapfen (12) des Nutensteins (13) übergreifenden Verriegelungsstein (11) eingeschlossen ist und bei geöffnetem Spannhebel (7) den Verriegelungsstein (14) zur Freigabe des Nutensteins (13) von diesem nach oben abhebt.

2. Vorrichtung nach Anspruch 1,
**dadurch gekennzeichnet,**
**dass** in der Durchgangsbohrung (16) des Unterteils (3; 3a) oberhalb des Verriegelungssteins (11) konzentrisch eine Innere und eine äußere Exzenterbuchse (17a, 17b) angeordnet sind.

3. Vorrichtung nach Anspruch 1 oder 2,
**dadurch gekennzeichnet,**
**dass** zumindest die beiden den Längskanten der Rasternut (15) der Sitzschiene (6) zugewandten Seiten des Verriegelungssteins (11) als Schlüsselflächen (27) ausgebildet sind.

4. Vorrichtung nach einem der Ansprüche 1 bis 3,
**dadurch gekennzeichnet,**
**dass** der Spannhebel (7) auf einem Druckstück (10) angeordnet ist.

5. Vorrichtung nach einem der Ansprüche 1 bis 4,
**dadurch gekennzeichnet,**
**dass** das Unterteil (6) mit bodenseitigen, in die Rasternut (15) der Führungsschiene (6) eintauchenden Führungsstegen (26) ausgebildet ist.

6. Vorrichtung nach einem der Ansprüche 1 bis 5,
**dadurch gekennzeichnet,**
**dass** das Unterteil (3) zweistückig ist und aus einem Bodenstück (3b) und einem Kopfstück (3a) besteht.

7. Vorrichtung nach einem der Ansprüche 1 bis 6,
**dadurch gekennzeichnet,**
**dass** bei einem einstückigen Unterteil (103) der Spannhebel (7) mit dem Druckstück (10) in einem Fenster (21) eines Oberteils (20) auf dem unteren Fenstersteg (22) angeordnet ist.

8. Vorrichtung nach einem der Ansprüche 1 bis 7,
**dadurch gekennzeichnet,**
**dass** das Schraubbolzenmittel (18) als ein Stehbolzen (18a) des Nutensteins (13) ausgebildet ist, auf den vom Spannhebel (7) her eine Mutter (25) aufschraubbar ist.

9. Vorrichtung nach einem der Ansprüche 1 bis 7,
**dadurch gekennzeichnet,**
**dass** das Schraubbolzenmittel (18) eine mit ihrem Kopf (19) im Spannhebel (7) aufliegende, mit Ihrem anderen Ende In den Nutenstein (13) einschraubbare Schraube (18b) ist.

10. Vorrichtung nach einem der Ansprüche 1 bis 9,
**dadurch gekennzeichnet,**
**dass** eine Bordküche bzw. eine Bordküchen-Einbaueinheit auf mindestens vier verteilt vorgesehenen Schnellbefestigungsmitteln (1) angeordnet ist.

## Claims

1. A device for releasable quick-mounting of cabinets or similar installed equipment supportingly received in galley units (2) of airplanes on seat rails (6) placed in the direction of flight on the cabin floor, comprising a clamp lever (7), a base (3; 103) and a slot nut (13) engaging in a raster groove (15) of the seat rail (6), a threaded bolt means (18; 18a, 18b) and a spring means (14),
**characterized in**
**that** a quick-mounting means (1) as connector to a wall (5) of the galley unit (2; 5), which wall is attached with a recess (4) onto the base (3; 103), comprises successively from top to bottom, the clamp lever (7), the base (3; 103) and the slot nut (13), wherein said components are preassembled on a threaded bolt means (18; 18a, 18b) extending centrally in aligned holes (16) and inserted through all components, being held together loosely in the untensioned state of the quick mounting means (1) by the spring means (14), allowing clearance for movement of at least the slot nut (13), wherein the spring means (14) is configured as compression spring which abuts against the slot nut (13) and is enclosed by a locking nut (11) insertable into the base (3; 103) and engaging over a head pin (12) of the slot nut (13) and which, with the clamp lever (7) being open, lifts the locking nut (11) upwardly from the slot nut (13) so as to release the same.

2. The device according to claim 1,
**characterized in**
**that** in the through-hole (16) of the base (3; 103), an inner and an outer eccentric bush (17a, 17b) are concentrically arranged above the locking nut (11).

3. The device according to claim 1 or claim 2,
**characterized in**
**that** at least the locking nut's (11) two sides facing toward the longitudinal edges of the raster groove (15) of the seat rail (6) are formed as flats (27).

4. The device according to any one of the claims 1 to 3,
**characterized in**
**that** the clamp lever (7) is arranged on a pressure piece (10).

5. The device according to any one of the claims 1 to 4,
**characterized in**
**that** the base (6) is formed with floor-side guide webs (26) extending into the raster groove (15) of the guide rail (6).

6. The device according to any one of the claims 1 to 5,
**characterized in**
**that** the base (3) is formed in two pieces and consists of a bottom piece (3b) and a top piece (3a).

7. The device according to any one of the claims 1 to 6,
**characterized in**
**that** in case of a one-piece base (103), the clamp lever (7) with the pressure piece (10) is arranged on the lower window bar (22) in a window (21) of an upper part (20).

8. The device according to any one of the claims 1 to 7,
**characterized in**
**that** the threaded bolt means (18) is formed as stud (18a) of the slot nut (13) onto which stud, coming from the clamp lever (7), a screw nut (25) can be screwed.

9. The device according to any one of the claims 1 to 7,
**characterized in**
**that** the threaded bolt means (18) is a screw (18b) which rests with its head (19) in the clamp lever (7) and can be screwed with its other end into the slot nut (13).

10. The device according to any one of the claims 1 to 9,
**characterized in**
**that** a galley or a galley installation unit is arranged on at least four quick-mounting means (1) provided in a distributed manner.

## Revendications

1. Dispositif pour la fixation rapide séparable d'armoires ou d'élément intégrés et d'équipement similaires reçus portants, dans des unités de cuisine de bord (2) d'avions sur les rails de siège (6) posés sur les sols de cabine dans le sens du vol, comprenant un levier de serrage (7), une sous-partie (3 ; 103) et un écrou pour rainure en T (13) se mettant en prise dans une rainure d'encliquetage (15) des rails de siège (6), un moyen de boulon (18 ; 18a, 18b) et un moyen de ressort (14)
**caractérisé en ce**
**qu'**un moyen de fixation rapide (1), en tant que connecteur vers une paroi (5) de l'unité de cuisine de bord (2 ; 5) placée avec un évidement (4) sur la sous-partie (3 ; 103) présente par ordre de haut en bas, le levier de serrage (7), la sous-partie (3 ; 103) et l'écrou pour rainure en T (13), sachant que ces pièces sont prémontées sur un moyen de boulon (18 ; 18a, 18b) bloqué par toutes les pièces de manière centrale dans des alésages (16) affleurants, avec une cohésion lâche permettant un jeu de mouvement au moins de l'écrou pour rainure en T (13), avec sollicitation par le moyen de ressort (14) dans l'état relâché du moyen de fixation rapide (1), sachant que le moyen de ressort (14) est formé comme un ressort de compression et est pris appuyé contre l'écrou pour rainure en T (13) par un cavalier de verrouillage (11) enjambant un tenon de tête (12) de l'écrou pour rainure en T (13), pouvant être inséré dans la sous-partie (3 ; 103) et lorsque le levier de serrage (7) est ouvert, il soulève vers le haut le cavalier de verrouillage (11) pour libérer l'écrou pour rainure en T (13).

2. Dispositif selon la revendication 1,
**caractérisé en ce que**
dans le perçage traversant (16) de la sous-partie (3 ; 103) au-dessus du cavalier de verrouillage (11), des douilles excentriques intérieure et extérieure (17a, 17b) sont placées de manière concentrique.

3. Dispositif selon la revendication 1 ou 2,
**caractérisé en ce**
**qu'**au moins les deux côtés du cavalier de verrouillage (11) tournés vers les arêtes longitudinales de la rainure d'encliquetage (15) des rails de siège (6) sont formés comme des pans de clé (27).

4. Dispositif selon l'une des revendications 1 à 3,
**caractérisé en ce que**
le levier de serrage (7) est disposé sur une pièce d'appui (10).

5. Dispositif selon l'une des revendications 1 à 4,
**caractérisé en ce que**
la partie inférieure (6) est formée avec des montants de guidage (26) côté sol, plongeant dans la rainure d'encliquetage (15) des rails de siège (6).

6. Dispositif selon l'une des revendications 1 à 5,
**caractérisé en ce que**
la partie inférieure (3) est en deux parties et se compose d'une pièce de fond (3b) et d'une pièce de tête (3a).

7. Dispositif selon l'une des revendications 1 à 6,
**caractérisé en ce**
**qu'**avec une partie inférieure (103) monobloc, le levier de serrage (7) est disposé avec la pièce d'appui (10) dans une fenêtre (21) d'une partie supérieure (20) sur le montant de fenêtre inférieur (22).

8. Dispositif selon l'une des revendications 1 à 7,
**caractérisé en ce que**
le moyen de boulon (18) est formé comme un boulon d'entretoisement (18a) de l'écrou à rainure (13) sur lequel un écrou (25) peut être vissé depuis le levier de serrage (7).

9. Dispositif selon l'une des revendications 1 à 7,
**caractérisé en ce que**
le moyen de boulon (18) est une vis (18b) reposant avec sa tête (19) dans le levier de serrage (7), pouvant être vissée dans l'écrou de rainure (13) par son autre extrémité.

10. Dispositif selon l'une des revendications 1 à 9,
**caractérisé en ce**
**qu'**une cuisine de bord respectivement une unité intégrée de cuisine de bord est disposée sur au moins quatre moyens de fixation rapide (1) prévus répartis.
